# EUROPEAN PATENT APPLICATION

(11) **EP 1 274 235 A2**
(43) Date of publication of application: **08.01.2003**
(21) Application number: 02254369.8
(22) Date of filing: 24.06.2002
(51) Int. Cl.: H04N 5/445, H04N 7/16

(54) **Television system**

(30) Priority: 06.07.2001 GB 0116516
(71) Applicant: Pace Micro Technology PLC, Saltaire, Shipley, BD18 3LF (GB)
(72) Inventor: Moir, Mark, Cambridge CB5 9QF (GB)
(74) Representative: Wood, Graham

(57) **Abstract**

A television system is provided with a connection to an Internet service provider and control means to allow a user to select a particular internet site via the Internet service provider. A television display screen is provided for displaying one or more pages of the selected internet site to the user. The television system generates a tool bar for display on the display screen, the tool bar including one or more graphic icons relating to one or more functions associated with the television system or selected internet site. At least one of the graphic icons is displayable in one of a selected number of formats, each format linked to a particular function of the television system or selected internet pages. The format of the graphic icon displayed on the display screen at any particular time is dependent on the status of the function of the television system or the selected Internet pages at that time.

## Description

This invention relates to a television system having Internet web browser capabilities.

It is known to provide a television system which includes a display screen and a broadcast data receiver for receiving broadcast digital data in the form of audio, video and/or auxiliary data from a remote location via cable, satellite and/or terrestrial transmission means. The receiver can be used as a web browser by providing a modem facility and a cable connection or other telecommunications link to allow user access to an Internet service provider.

With broadcast data receivers which are used as web browsers to generate and display Internet site pages on a display screen, the screen resolution can be very limiting, and there is typically less space available for display of data thereon compared to a computer monitor screen. As a result, displays such as toolbars, which are a collection of user selectable icons displayed on screen, each icon representing a function performed by the browser when selected, which can be clearly shown on a computer monitor can appear cramped and unclear on a television display screen.

It is therefore an aim of the present invention to provide a television system which can generate a tool bar in a format requiring a reduced amount of space for the display of graphic icons than is conventionally required.

According to a first aspect of the present invention there is provided a television system, said television system having means for connection to an Internet service provider, means to allow a user to select a particular internet site via the Internet service provider and a display screen for displaying one or more pages of the selected internet site to the user, said television system generating a tool bar for display on said display screen and said tool bar including one or more graphic icons relating to one or more functions associated with said television system or selected internet site, and characterised in that at least one of said graphic icons is displayable in one of a selected number of formats, each format linked to a particular function of the television system or selected internet pages, the format of the graphic icon displayed on the display screen at any particular time dependent on the status of the function of the television system or the selected Internet site pages at that time.

Preferably each format of the graphic icon is linked to a particular system function code. This is code provided in the system software which allows a particular function or functions to be designated to each graphic icon, such that on selection of the icon by the user, the function or functions are performed. Only the functions associated with the graphic icon when in a particular format are performed on user-selection.

Preferably the icon displayed changes when a user makes a selection from the tool bar which changes the operational status of the Internet site selected.

Preferably the icon that changes on the tool bar is the icon selected by the user.

The function code associated with an icon typically changes once the icon has been selected by the user using control means, the system detects this change and the icon display changes. Alternatively, the format of a first graphic icon can change when a user selects a further graphic icon from the tool bar using control means.

Preferably a broadcast data receiver (BDR) included in the television system detects the change in function code via processing means and generates a change in the displayed icon accordingly.

In one embodiment the visual appearance of the graphic icon changes when a particular function in the television system, broadcast data receiver and/or selected Internet pages/web site changes. For example, if the status or operational status of the television system, broadcast data receiver and/or Internet pages/web site changes, this change is detected and the format of the graphic icon changes accordingly.

In one embodiment, each graphic icon is in the form of a key selectable by depression of the equivalent key on control means on the receiver, television, remote control handset associated with the television system and/or any other conventional means, such as voice recognition, joypad, keyboard and/or the like.

Preferably text is provided as a part of or substantially all of the graphic icon. In this embodiment the icon format changes by generating a change in text. Once a change in the status or function of a particular operation in the television system, receiver and/or Internet web page is detected.

Preferably the at least one graphic icon has two different possible display formats associated with two different functions.

In one embodiment the at least one graphic icon can change between formats to represent the stop/reload functions of a web page. As such, if a web page is selected for reloading using the reload icon, the system detects a change in the function code of this icon and the reload icon changes to a stop icon, as this is the only function that is available for selection when the web page is reloading. If the stop icon is then selected, the system again detects a change in the function code of the icon and the stop icon changes to a reload icon, as this is the only function that is available for selection when web page reloading has been stopped.

Preferably the system detects the on/off status of a particular function code and depending on the on/off status different graphical icons and generated for display on the tool bar.

According to a second aspect of the present invention there is provided a broadcast data receiver having means for connection to an Internet service provider, means to allow a user to select a particular internet site via the Internet service provider and a display screen connected thereto of forming a part thereof for displaying one or more pages of the selected internet site to the user, said broadcast data receiver generating a tool bar for display on said display screen and said tool bar including one or more graphic icons relating to one or more functions associated with said broadcast data receiver or selected internet site, and characterised in that at least one of said graphic icons is displayable in one of a selected number of formats, each format linked to a particular function of the broadcast data receiver or selected internet pages, the format of the graphic icon displayed on the display screen at any particular time dependent on the status of the function of the broadcast data receiver or the selected Internet pages at that time.

According to further aspects of the present invention there is provided a toolbar generated for display on a display screen of a television system, said television system having means for connection to an Internet service provider, means to allow a user to select a particular internet site via the Internet service provider and a display screen for displaying one or more pages of the selected internet site to the user, said tool bar including one or more graphic icons relating to one or more functions associated with said television system or selected internet site, and characterised in that at least one of said graphic icons is displayable in one of a selected number of formats, each format linked to a particular function of the television system or selected internet pages, the format of the graphic icon displayed on the display screen at any particular time dependent on the status of the function of the television system or the selected Internet pages at that time.

According to a yet further aspect of the present invention there is provided a toolbar generated for display on a display screen connected to or forming part of a broadcast data receiver, said broadcast data receiver having means for connection to an Internet service provider and means to allow a user to select a particular internet site via the Internet service provider for displaying one or more pages of the selected internet site to the user, said tool bar including one or more graphic icons relating to one or more functions associated with said broadcast data receiver or selected internet site, and characterised in that at least one of said graphic icons is displayable in one of a selected number of formats, each format linked to a particular function of the broadcast data receiver or selected internet pages, the format of the graphic icon displayed on the display screen at any particular time dependent on the status of the function of the broadcast data receiver or the selected Internet pages at that time.

The advantage of the present invention is that by providing a single icon on the tool bar with more than one function code, the same icon can be actuated to perform more than one function, such that valuable display screen space is saved. Thus rather than all of the graphic icons of a tool bar being displayed at the same time, the format of one or more of the graphic icons change with respect to the functions that are available for selection using the tool bar at that time, so that only those graphic icons, from a wider range of possible icons, which are relevant and selectable with respect to the status of the system at that time, are displayed.

An embodiment of the present invention will now be described with reference to the accompanying figures wherein:
Figure 1 is an example of a toolbar for a display showing a first function icon display;
Figure 2 is an example of the toolbar in figure 1 showing a second function icon display; and
Figure 3 illustrates a television system according to the present invention.

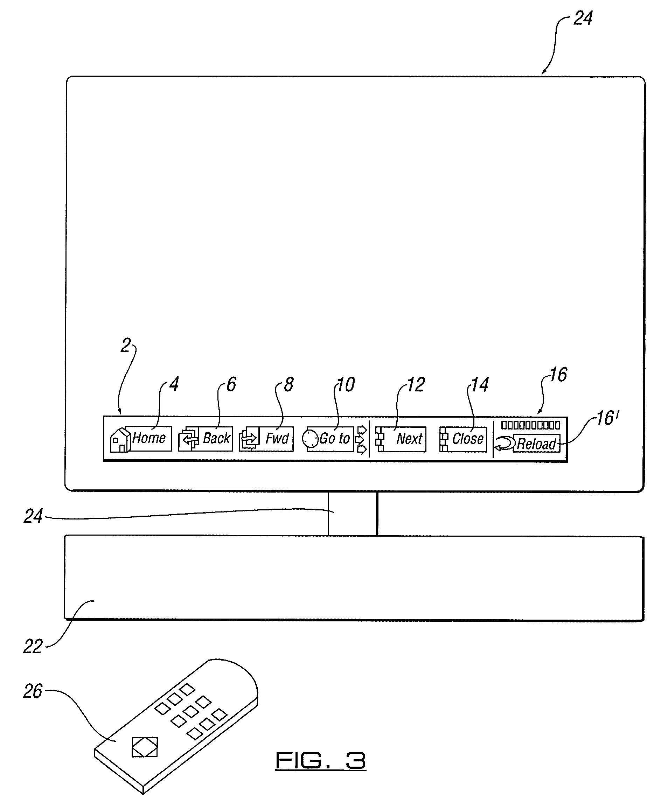

Referring to figure 3, there is illustrated a tool bar 2 for display on a display screen 20 of a television system. The television system includes a broadcast data receiver (BDR) 22 connected to the television display screen via connection means 24. The BDR has web browser capabilities and a number of user-selectable functions are provided on the BDR via an Internet provider to which the BDR is connected, and these functions are typically selectable using the depression of appropriate keys on a remote control handset 26.

Conventionally there is typically a reduction of approximately 30-40% in the amount of screen width available on a television display screen compared to a computer monitor display. Therefore, conventionally, control buttons and tool bars which can be clearly shown on a computer monitor can appear cramped on a television display screen, and may be visually difficult to distinguish.

One example of a tool bar appearing on the display screen when the television system is in a web browser mode comprises a number of graphic icons depicting user selectable keys. These keys include a "Home" icon 4 for allowing the user to return to a home display page, a "Back" icon 6 and "Forward" icon 8 for allowing the user to move backwards and forwards respectively through a number of web pages, a "Go to" icon 10 for allowing a user to decide which web page they wish to view, a "Next" icon 12 for moving the displayed page to the next available display page and a "Close" icon 14 for closing the web page currently being displayed.

In addition and, in accordance with the present invention, a user selectable icon 16 is provided which can generate different function codes/event codes depending on the status of the selected Internet site. Thus, if the Internet site is performing a particular operation, either following selection of a function by a user or following instructions from the broadcast data receiver, the status of the Internet site changes. This change in status is detected by the receiver, and the receiver then initiates a signal resulting in a change to the event code of the displayed icon 16. Thus the one icon 16 can change format to allow two or more functions to be provided for selection by the user using the single icon display, with the function format displayed by the icon 16 available for selection at any one time dependent on the status of the internet site, pages or Broadcast data receiver at that time. For example, Reload and Stop functions can be selectively provided for selection using the single icon display 16.

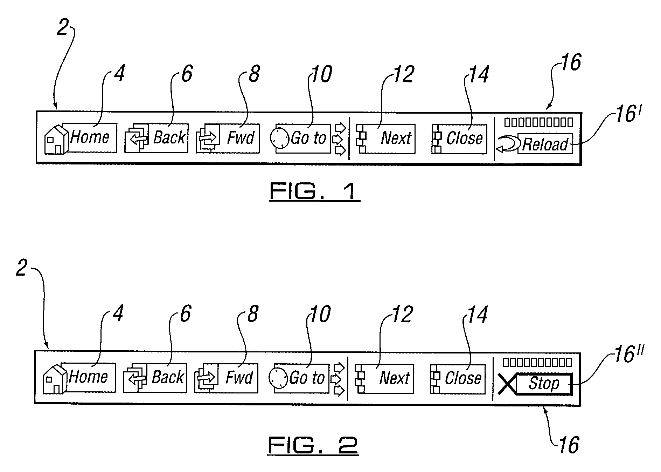

Figure 1 shows a "Reload" icon 16' (or "Refresh" icon) which is typically selected when the user wishes to update the currently displayed web page. Selection of icon 16' commands the browser to fetch the latest version of the page and its resources. When the browser is performing this fetch function, the user can select to stop the operation and to allow this selection, the reload icon 16' changes to a "Stop" icon 16", as shown in figure 2. If the user selects the stop icon 16", the display returns to icon 16' because loading of the page has stopped and the user may wish to reload the web page again. Since the "Reload" and "stop" functions cannot be actuated simultaneously (i.e., one function cannot be undertaken if the other function is being progress), the space taken up by having two separate buttons displayed on the display screen is wasted. Thus, when one or more functions are not available for selection when the receiver or web page are performing a particular operation, the format of the graphic icons on the tool bar are changed to allow selection of other associated functions which are available for selection at that time.

Thus the system of the present invention allows an icon representing a user selection on a tool bar to have two separate functions typically by providing two operational states; i.e., on and off states, by associating different function codes therewith. In the off state, the graphic format generated for the icon is Reload, so that when the browser is at rest, a click on this icon reloads the page and during reloading the format displayed changes to "STOP", i.e. when the operational state is on. The events that are assigned to each of the two states are different, and so selection of the icon, alters the state of the icon and thus passes a different code to the receiver for providing the stop function.

As the stop icon is only functional when a web page is being reloaded, and the reload icon is only functional when the web page has stopped being loaded, the two icons can be combined without loss of, or at least limited loss of function. The combination of the functions in a single icon reduces the space required compared to two separate icons being provided.

## Claims

1. A television system, said television system having means for connection to an Internet service provider, means to allow a user to select a particular internet site via the Internet service provider and a display screen for displaying one or more pages of the selected internet site to the user, said television system generating a tool bar for display on said display screen and said tool bar including one or more graphic icons relating to one or more functions associated with said television system or selected internet site, and **characterised in that** at least one of said graphic icons is displayable in one of a selected number of formats, each format linked to a particular function of the television system or selected internet pages, the format of the graphic icon displayed on the display screen at any particular time dependent on the status of the function of the television system or the selected Internet site pages at that time.

2. A television system according to claim 1 **characterised in that** each format of the graphic icon is linked to a particular system function code.

3. A television system according to claim 2 **characterised in that** the system function code linked to a graphic icon changes on selection of the graphic icon by the user.

4. A television system according to claim 3 **characterised in that** processing means of the system detects a change in the system function code and initiates a change in the format of the graphic icon accordingly.

5. A television system according to claim 4 **characterised in that** a broadcast data receiver is provided with processing means for detecting a change in the system function code.

6. A television system according to claim 1 **characterised in that** the visual appearance of the graphic icon changes depending on the status of the function of the television system or selected Internet pages.

7. A television system according to claim 3 **characterised in that** text is provided as part of or substantially all of the graphic icon, and a change in the graphic icon generates a change in the text depending on the status of the function of the television system or selected Internet pages.

8. A television system according to claim 1 **characterised in that** the format of the graphic icon changes when a user selects said graphic icon using control means.

9. A television system according to claim 1 **characterised in that** the format of a first graphic icon changes when a user selects a further graphic icon from the tool bar using control means.

10. A television system according to claim 1 **characterised in that** the at least graphic icon has two possible display formats associated with two different functions.

11. A television system according to claim 10 **characterised in that** the at least one graphic icon has different formats for the stop and reload functions of a selected Internet page.

12. A television system according to claim 11 **characterised in that** when the "reload" graphic icon is selected for reloading an Internet page, the system detects the selection and changes the format of the reload graphic icon to a "stop" icon and vice versa.

13. A television system according to claim 10 **characterised in that** the two possible functions are "on" and "off" conditions and a graphic icon has two different display formats therefor.

14. A broadcast data receiver having means for connection to an Internet service provider, means to allow a user to select a particular internet site via the Internet service provider and a display screen connected thereto of forming a part thereof for displaying one or more pages of the selected internet site to the user, said broadcast data receiver generating a tool bar for display on said display screen and said tool bar including one or more graphic icons relating to one or more functions associated with said broadcast data receiver or selected internet site, and **characterised in that** at least one of said graphic icons is displayable in one of a selected number of formats, each format linked to a particular function of the broadcast data receiver or selected internet pages, the format of the graphic icon displayed on the display screen at any particular time dependent on the status of the function of the broadcast data receiver or the selected Internet pages at that time.

15. A toolbar generated for display on a display screen of a television system, said television system having means for connection to an Internet service provider, means to allow a user to select a particular internet site via the Internet service provider and a display screen for displaying one or more pages of the selected internet site to the user, said tool bar including one or more graphic icons relating to one or more functions associated with said television system or selected internet site, and **characterised in that** at least one of said graphic icons is displayable in one of a selected number of formats, each format linked to a particular function of the television system or selected internet pages, the format of the graphic icon displayed on the display screen at any particular time dependent on the status of the function of the television system or the selected Internet pages at that time.

16. A toolbar generated for display on a display screen connected to or forming part of a broadcast data receiver, said broadcast data receiver having means for connection to an Internet service provider and means to allow a user to select a particular internet site via the Internet service provider for displaying one or more pages of the selected internet site to the user, said tool bar including one or more graphic icons relating to one or more functions associated with said broadcast data receiver or selected internet site, and **characterised in that** at least one of said graphic icons is displayable in one of a selected number of formats, each format linked to a particular function of the broadcast data receiver or selected internet pages, the format of the graphic icon displayed on the display screen at any particular time dependent on the status of the function of the broadcast data receiver or the selected Internet pages at that time.
